# EUROPEAN PATENT APPLICATION

(11) **EP 4 610 945 A1**
(43) Date of publication of application: **03.09.2025**
(21) Application number: 23887635.3
(22) Date of filing: 11.09.2023
(51) Int. Cl.: G06V 20/56

(54) **IMAGE PROCESSING METHOD AND APPARATUS, AND ELECTRONIC DEVICE AND STORAGE MEDIUM**

(30) Priority: 11.11.2022 CN 202211417346
(71) Applicant: Beijing Horizon Information Technology Co., Ltd., Beijing 100094 (CN)
(72) Inventor: JIANG, Bo, Beijing 100094 (CN); CHEN, Shaoyu, Beijing 100094 (CN); LIAO, Bencheng, Beijing 100094 (CN); CHENG, Tianheng, Beijing 100094 (CN); CHEN, Jiajie, Beijing 100094 (CN); ZHOU, Helong, Beijing 100094 (CN); ZHANG, Qian, Beijing 100094 (CN); HUANG, Chang, Beijing 100094 (CN)
(74) Representative: Patentanwälte Magenbauer & Kollegen Partnerschaft mbB
(86) International application number: PCT/CN2023/118093
(87) International publication number: WO 2024/098941

(57) **Abstract**

Embodiments of this disclosure disclose an image processing method and apparatus, an electronic device, and a storage medium. The method includes: determining a first image feature corresponding to each angle of view based on a to-be-processed image corresponding to each of one or more angles of view; determining a first bird's eye view feature based on the first image feature corresponding to each angle of view; determining at least one task query feature in a static element task query feature, a dynamic object task query feature, and a motion trajectory task query feature based on the first bird's eye view feature; and determining, based on each of the one or more task query features, a task processing result corresponding to each task query feature. The embodiments of this disclosure can achieve end-to-end single-task or multi-task processing by relying merely on multi-angle-of-view environment images. Thus, accurate surrounding environment information can also be effectively obtained even if there is no high-precision map, thereby greatly improving universality and effectively reducing costs.

## Description

This disclosure claims priority to Chinese patent application No. CN202211417346.2, filed with the China National Intellectual Property Administration on November 11, 2022 and entitled "IMAGE PROCESSING METHOD AND APPARATUS, ELECTRONIC DEVICE, AND STORAGE MEDIUM", which is incorporated herein by reference in its entirety.

### FIELD OF THE INVENTION

This disclosure relates to computer visual technologies, and in particular, to an image processing method and apparatus, an electronic device, and a storage medium.

### BACKGROUND OF THE INVENTION

In the field of autonomous driving, how to efficiently understand environment information based on multi-angle-of-view environment images is an extremely important technical problem.

### SUMMARY OF THE INVENTION

Embodiments of this disclosure provide an image processing method and apparatus, an electronic device, and a storage medium.

According to an aspect of an embodiment of this disclosure, an image processing method is provided, including: determining a first image feature corresponding to each angle of view based on a to-be-processed image corresponding to each of one or more angles of view; determining a first bird's eye view feature based on the first image feature corresponding to each angle of view; determining at least one task query feature in a static element task query feature, a dynamic object task query feature, and a motion trajectory task query feature based on the first bird's eye view feature; and determining, based on each of the one or more task query features, a task processing result corresponding to each task query feature.

According to another aspect of an embodiment of this disclosure, an image processing apparatus is provided, including: a first processing module, configured to determine a first image feature corresponding to each angle of view based on a to-be-processed image corresponding to each of one or more angles of view; a second processing module, configured to determine a first bird's eye view feature based on the first image feature corresponding to each angle of view; a third processing module, configured to determine at least one task query feature in a static element task query feature, a dynamic object task query feature, and a motion trajectory task query feature based on the first bird's eye view feature; and a fourth processing module, configured to determine, based on each of the one or more task query features, a task processing result corresponding to each task query feature.

According to still another aspect of an embodiment of this disclosure, a computer readable storage medium is provided, where the storage medium stores a computer program, and the computer program is used for implementing the image processing method according to any one of the foregoing embodiments of this disclosure.

According to yet another aspect of an embodiment of this disclosure, an electronic device is provided, where the electronic device includes: a processor; and a memory configured to store processor-executable instruction, wherein the processor is configured to read the executable instructions from the memory and execute the instructions to implement the image processing method according to any one of the foregoing embodiments of this disclosure.

According to the image processing method and apparatus, the electronic device, and the storage medium that are provided in the embodiments of this disclosure, the bird's eye view feature may be determined based on image features respectively corresponding to all the angles of view that are determined based on the to-be-processed image of each angle of view; at least one task query feature may be determined based on the bird's eye view feature; and further, task processing results respectively corresponding to various tasks may be obtained based on the task query features. End-to-end single-task or multi-task processing may be implemented based on multi-angle-of-view environment images, which may avoid or reduce dependence on high-precision maps. Thus, accurate surrounding environment information can also be effectively obtained even if there is no high-precision map, which helps to improve universality and may reduce costs.

The technical solutions of this disclosure are further described below in detail with reference to the accompanying drawings and the embodiments.

### BRIEF DESCRIPTION OF THE DRAWINGS

FIG. 1 is an exemplary application scenario of an image processing method according to this disclosure;
FIG. 2 is a schematic flowchart of an image processing method according to an exemplary embodiment of this disclosure;
FIG. 3 is a schematic flowchart of an image processing method according to another exemplary embodiment of this disclosure;
FIG. 4 is a schematic flowchart of step 2031a according to an exemplary embodiment of this disclosure;
FIG. 5 is a schematic diagram of a network structure of a first decoding network according to an exemplary embodiment of this disclosure;
FIG. 6 is a schematic flowchart of step 2031b according to an exemplary embodiment of this disclosure;
FIG. 7 is a schematic flowchart of step 2031c according to an exemplary embodiment of this disclosure;
FIG. 8 is a schematic diagram of a structure of a third decoding network according to an exemplary embodiment of this disclosure;
FIG. 9 is a schematic flowchart of an image processing method according to still another exemplary embodiment of this disclosure;
FIG. 10 is a schematic flowchart of step 301 according to an exemplary embodiment of this disclosure;
FIG. 11 is a schematic diagram of a principle of determining an initial motion trajectory query feature according to an exemplary embodiment of this disclosure;
FIG. 12 is a schematic flowchart of step 2021 according to an exemplary embodiment of this disclosure;
FIG. 13 is a schematic diagram of a network structure of an encoder network according to an exemplary embodiment of this disclosure;
FIG. 14 is a schematic diagram of an overall structure of a network model for image processing according to an exemplary embodiment of this disclosure;
FIG. 15 is a schematic diagram of a structure of an image processing apparatus according to an exemplary embodiment of this disclosure;
FIG. 16 is a schematic diagram of a structure of an image processing apparatus according to another exemplary embodiment of this disclosure;
FIG. 17 is a schematic diagram of a structure of a third processing module 503 according to an exemplary embodiment of this disclosure; and
FIG. 18 is a schematic diagram of a structure of an electronic device according to an application embodiment of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited to the exemplary embodiments.

It should be noted that unless otherwise specified, the scope of this disclosure is not limited by relative arrangement, numeric expressions, and numerical values of components and steps described in these embodiments.

### Overview of this disclosure

In a process of implementing this disclosure, the inventor finds that in the field of autonomous driving, how to efficiently understand environment information based on multi-angle-of-view environment images is an extremely important technical problem. If surrounding environment information is understood based on the multi-angle-of-view environment images in combination with high-precision maps, poor accuracy of the environment information obtained without high-precision maps may be easily resulted in.

### Exemplary overview

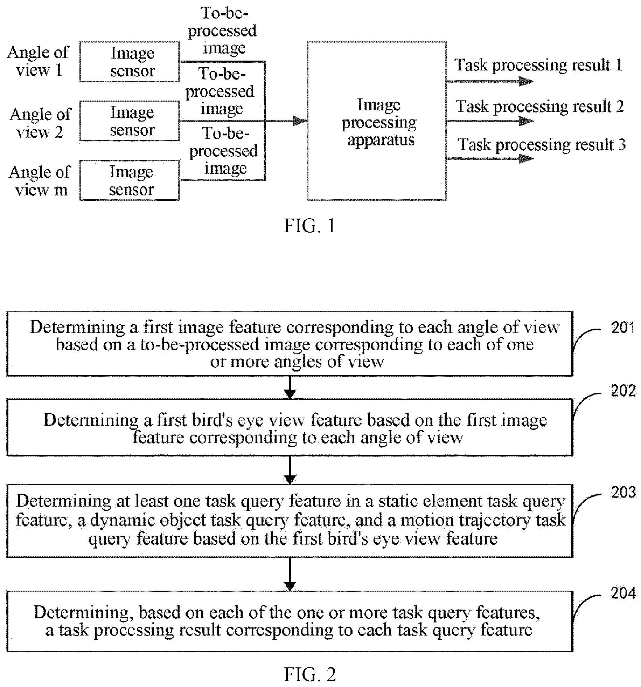

FIG. 1 is an exemplary application scenario of an image processing method according to this disclosure.

In an autonomous driving scenario, images of surrounding environments of a vehicle may be collected by using in-vehicle surround view cameras (which may include cameras in a plurality angles of view) to serve as to-be-processed images respectively corresponding to all angles of view. The image processing method in this disclosure is implemented by using an image processing apparatus in this disclosure. A first image feature corresponding to each angle of view may be determined based on a to-be-processed image corresponding to each of one or more angles of view; a first bird's eye view feature may be determined based on the first image feature corresponding to each angle of view, wherein the first bird's eye view feature is a feature in a grid coordinate system corresponding to a bird's eye view (BEV); a static element task query feature, a dynamic object task query feature, and a motion trajectory task query feature may be determined based on the first bird's eye view feature; and further, corresponding task processing results (for example but not limited to a task processing result 1, a task processing result 2, and a task processing result 3) may be determined based on the static element task query feature, the dynamic object task query feature, and the motion trajectory task query feature, respectively. For example, a static element task processing result (which is specifically, for example, a static element detection result of the surrounding environment of the vehicle in the autonomous driving scenario) is determined based on the static element task query feature, a dynamic object task processing result (which is specifically, for example, a three-dimensional object detection result) is determined based on the dynamic object task query feature, and a motion trajectory task processing result (which is specifically, for example, a motion trajectory prediction result of a dynamic object) is determined based on the motion trajectory task query feature. In this way, end-to-end single-task or multi-task processing is implemented based on multi-angle-of-view environment images, without combining high-precision maps. This helps to avoid or reduce dependence on the high-precision maps. Thus, accurate surrounding environment information can also be effectively obtained even if there is no high-precision map, which helps to improve universality and may reduce costs. Static elements may include static object elements such as a lane marking, a zebra crossing, and a road edge. Dynamic objects may include objects with motion properties such as surrounding vehicles and pedestrians. Motion trajectories refer to motion trajectories of the dynamic objects.

It should be noted that the image processing method in this disclosure is not limited to the autonomous driving scenario described above, and may be applied to any other possible scenarios according to actual requirements, such as a security monitoring scenario in a certain area. Bird's eye view features within this area are obtained based on images collected by cameras in various angles of view, thus implementing end-to-end task processing for the static elements, the dynamic objects, and/or the motion trajectories of the dynamic objects within this area. A specific scenario may be set according to actual requirements.

### Exemplary method

FIG. 2 is a schematic flowchart of an image processing method according to an exemplary embodiment of this disclosure. This embodiment may be applicable to an electronic device, such as an in-vehicle computing platform. As shown in FIG. 2, the method includes the following steps.

Step 201: Determining a first image feature corresponding to each angle of view based on a to-be-processed image corresponding to each of one or more angles of view.

A quantity of angles of view may be set according to actual requirements. For example, in an autonomous driving scenario, the quantity of the angles of view is a quantity of surround view cameras disposed on a vehicle, with each camera corresponding to one angle of view. For example, a four-way surround view system consisting of a left front camera, a left rear camera, a right front camera, and a right rear camera includes four angles of view. This is not specifically limited. The first image feature may be obtained by using any feasible feature extraction mode. For example, feature extraction is performed on all to-be-processed images based on a pre-trained feature extraction network, to obtain the first image feature corresponding to each angle of view. The feature extraction network may be set according to actual requirements. For example, a convolutional neural network may be used as the feature extraction network.

In an optional example, step 201 can be executed either by a processor invoking corresponding instructions stored in a memory, or by a first processing module that is run by the processor.

Step 202: Determining a first bird's eye view feature based on the first image feature corresponding to each angle of view.

The first bird's eye view feature is a BEV feature in a grid coordinate system corresponding to a bird's eye view, and may be obtained by encoding the first image feature of each angle of view based on a pre-trained encoder network. The encoder network may be set according to actual requirements.

In an optional example, step 202 can be executed either by the processor invoking corresponding instructions stored in the memory, or by a second processing module that is run by the processor.

Step 203: Determining at least one task query feature in a static element task query feature, a dynamic object task query feature, and a motion trajectory task query feature based on the first bird's eye view feature.

The static element task query feature is a task query feature that is extracted from the first bird's eye view feature and is related to a static element. Similarly, the dynamic object task query feature is a task query feature that is extracted from the first bird's eye view feature and is related to a dynamic object; and the motion trajectory task query feature is a task query feature that is extracted from the static element task query feature and is related to a motion trajectory of the dynamic object. Which task query feature or task query features that specifically need to be obtained may be set according to actual requirements. For example, any one task query feature may be obtained, or any two or three task query features may be obtained at same time. Any task query feature may be obtained by decoding the first bird's eye view feature by using a pre-trained decoding network corresponding to this task. A specific decoding network may be set according to actual requirements.

In an optional example, step 203 can be executed either by the processor invoking corresponding instructions stored in the memory, or by a third processing module that is run by the processor.

Step 204: Determining, based on each of the one or more task query features, a task processing result corresponding to each task query feature.

For any task, a corresponding head network may be set and may be trained to obtain a trained head network for outputting and projecting the task query feature corresponding to that task, so as to obtain a task processing result corresponding to this task query feature. A specific network structure of the head network may be set according to actual requirements, for example, may be implemented by using a multilayer perceptron (MLP).

In an optional example, step 204 can be executed either by the processor invoking corresponding instructions stored in the memory, or by a fourth processing module that is run by the processor.

According to the image processing method provided in this embodiment, the bird's eye view feature may be determined based on the image feature corresponding to each angle of view that is determined based on the to-be-processed image of each angle of view; at least one task query feature may be determined based on the bird's eye view feature; and further, a task processing result corresponding to each task may be obtained based on the task query feature. In this way, end-to-end single-task or multi-task processing may be implemented merely based on multi-angle-of-view environment images, without combining high-precision maps, which may avoid or reduce dependence on the high-precision maps. Thus, accurate surrounding environment information can also be effectively obtained even if there is no high-precision map, which helps to improve universality and may reduce costs.

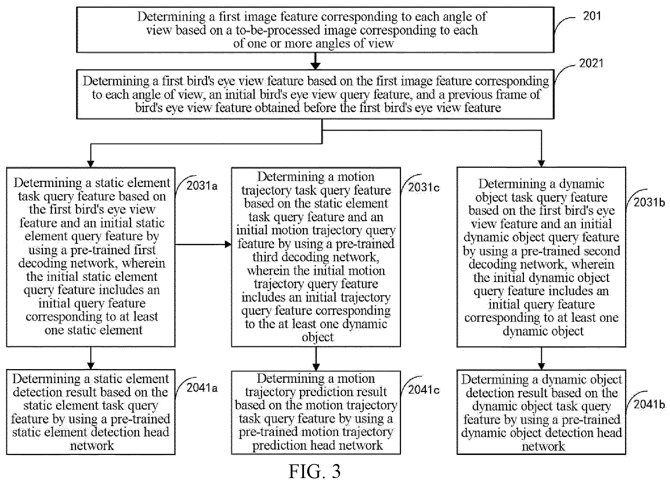

FIG. 3 is a schematic flowchart of an image processing method according to another exemplary embodiment of this disclosure.

In an optional example, step 203 may specifically include the following step.

Step 2031a: Determining the static element task query feature based on the first bird's eye view feature and an initial static element query feature by using a pre-trained first decoding network, wherein the initial static element query feature includes an initial query feature corresponding to each of one or more static elements.

The initial static element query feature may be set according to actual requirements. For example, the initial static element query feature is obtained through initialization according to a first initialization rule. The first initialization rule may be set according to actual requirements. For example, N2 D-dimensional static queries (the static queries represent initial query features corresponding to the static elements) are randomly initialized to serve as initial static element query features. N2 is a quantity of the static queries, that is, a quantity of the static elements; N2 may be set according to actual requirements; and D represents a dimension of the initial query feature corresponding to each static element. The first decoding network may include at least one decoder, which is used to query task query features related to the static elements from the first bird's eye view feature based on the initial static element query features, so as to obtain the static element task query feature. A specific network structure of the first decoding network may be set according to actual requirements.

In an optional example, step 2031a can be executed either by the processor invoking corresponding instructions stored in the memory, or by a first processing unit that is run by the processor.

In this embodiment of this disclosure, the static element task query feature related to the static element is queried from the first bird's eye view feature based on the initial static element query feature by using the first decoding network obtained through training, providing more accurate and effective feature data for implementation of subsequent static element detection tasks, so as to implement end-to-end task processing based on multi-angle-of-view images. When the image processing method is applied to a map reconstruction scenario, static map information may be generated online without relying on high-precision maps that are generated offline, thereby further improving universality.

In an optional example, step 203 may specifically include the following step.

Step 2031b: Determining the dynamic object task query feature based on the first bird's eye view feature and an initial dynamic object query feature by using a pre-trained second decoding network, wherein the initial dynamic object query feature includes an initial query feature corresponding to each of one or more dynamic objects.

The initial dynamic object query feature may be set according to actual requirements. For example, the initial dynamic object query feature is obtained through initialization according to a second initialization rule. The second initialization rule may be set according to actual requirements. For example, N1 D-dimensional dynamic queries (the dynamic queries represent initial query features corresponding to the dynamic objects) are randomly initialized to serve as initial dynamic object query features. N1 is a quantity of the dynamic queries, that is, a quantity of the dynamic objects; N1 may be set according to actual requirements; and D represents a dimension of the initial query feature corresponding to each dynamic object. The second decoding network may include at least one decoder, which is used to query task query features related to the dynamic objects from the first bird's eye view feature based on the initial dynamic object query features, so as to obtain the dynamic object task query feature. A specific network structure of the second decoding network may be set according to actual requirements.

In an optional example, step 2031b can be executed either by the processor invoking corresponding instructions stored in the memory, or by a second processing unit that is run by the processor.

In this embodiment of this disclosure, the dynamic object task query feature related to the dynamic object is queried from the first bird's eye view feature based on the initial dynamic object query feature by using the second decoding network obtained through training, providing more accurate and effective feature data for implementation of subsequent dynamic object detection tasks, so as to implement end-to-end three-dimensional object detection task processing based on multi-angle-of-view images. In this way, retracking of the dynamic objects may be avoided, which helps to reduce computational complexity of a network model; and meanwhile, impact of target tracking errors on subsequent applications may be avoided.

In an optional example, step 203 may specifically include the following step.

Step 2031c: Determining the motion trajectory task query feature based on the static element task query feature and an initial motion trajectory query feature by using a pre-trained third decoding network, wherein the initial motion trajectory query feature includes an initial trajectory query feature corresponding to each of the one or more dynamic objects.

The initial motion trajectory query feature needs to be determined in combination with the dynamic object task query feature and a modal query feature. The modal query feature is used to represent a motion trend of the dynamic object, and different modalities focus on different types of future motions (such as fast straight, low-speed straight, left turn, and right turn). The dynamic object task query feature is used to represent a feature related to the dynamic object. The initial trajectory query feature related to the motion trajectory of the dynamic object may be determined in combination with the modal query feature and the dynamic object task query feature, and further the initial trajectory query feature interacts with the static element task query feature in the third decoding network to decode the motion trajectory task query feature. The third decoding network may be set according to actual requirements.

In an optional example, step 2031c can be executed either by the processor invoking corresponding instructions stored in the memory, or by a third processing unit that is run by the processor.

In this embodiment of this disclosure, the motion trajectory task query feature related to the motion trajectory of the dynamic object is queried from the static element task query feature based on the initial motion trajectory query feature by using the third decoding network obtained through training, providing more accurate and effective feature data for implementation of subsequent motion trajectory prediction tasks of the dynamic object, so as to implement end-to-end motion trajectory prediction task processing based on multi-angle-of-view images.

In an optional example, step 203 may include at least two of steps 2031a to 2031c described above, which may be specifically set according to actual requirements, so that end-to-end multi-task processing may be implemented merely based on multi-angle-of-view images, while task processing results respectively corresponding to a plurality of tasks may be obtained. In this case, dependence on high-precision maps and laser radars may be avoided, helping to further improve universality.

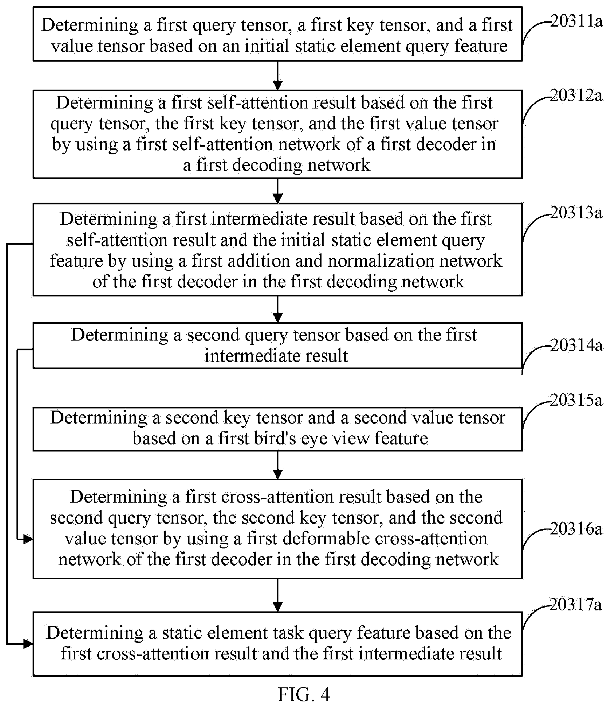

FIG. 4 is a schematic flowchart of step 2031a according to an exemplary embodiment of this disclosure.

In an optional example, step 2031a of determining the static element task query feature based on the first bird's eye view feature and an initial static element query feature by using a pre-trained first decoding network includes the following steps.

Step 20311a: Determining a first query tensor, a first key tensor, and a first value tensor based on the initial static element query feature.

The initial static element query feature may be mapped as the first query tensor according to a first query mapping rule. For example, mapping is performed based on a first query mapping matrix. Similarly, the initial static element query feature may be mapped as the first key tensor according to a first key mapping rule, and may be mapped as the first value tensor according to a first value mapping rule. A specific mapping rule is not described in detail.

Step 20312a: Determining a first self-attention result based on the first query tensor, the first key tensor, and the first value tensor by using a first self-attention network of a first decoder in the first decoding network.

The first self-attention network is a network based on a self-attention mechanism, which may be set according to actual requirements to complete self-attention operations on the first query tensor, the first key tensor, and the first value tensor. Specifically, the self-attention operations are performed based on the first query tensor and the first key tensor to obtain first weight. Further, weighted summation is performed on the first value tensor based on the first weight to obtain the first self-attention result. A specific principle of the self-attention mechanism is not described in detail.

Step 20313a: Determining a first intermediate result based on the first self-attention result and the initial static element query feature by using a first addition and normalization network of the first decoder in the first decoding network.

The first addition and normalization network (Add&Norm) has two functions: addition and normalization. Addition is to add the first self-attention result to the initial static element query feature to obtain a first addition result. Further, the first addition result is normalized to obtain the first intermediate result.

Step 20314a: Determining a second query tensor based on the first intermediate result.

The first intermediate result may be used as the second query tensor, or may be mapped as the second query tensor according to a corresponding mapping rule, which may be specifically set according to actual requirements.

Step 20315a: Determining a second key tensor and a second value tensor based on the first bird's eye view feature.

For principles of determining of the second key tensor and the second value tensor, please refer to the content described above, and details are not described herein.

Step 20316a: Determining a first cross-attention result based on the second query tensor, the second key tensor, and the second value tensor by using a first deformable cross-attention network of the first decoder in the first decoding network.

The first deformable cross-attention network is a cross-attention network based on deformable convolution, which can extract, from the first bird's eye view feature, features in a local area near a corresponding position of the initial static element query feature, thereby further improving accuracy and effectiveness of feature extraction.

Step 20317a: Determining the static element task query feature based on the first cross-attention result and the first intermediate result.

In addition to the first deformable cross-attention network, the first decoder of the first decoding network may also include other related networks such as an addition and normalization network (Add&Norm) and a feedforward network (Feed Forward). Therefore, after being obtained, the first cross-attention result may be added to the first intermediate result and is normalized, and then a decoding result of the first decoder may be finally obtained based on the other related networks. When the first decoding network includes a plurality of decoders, the decoding result of the first decoder may also be used as input of the second decoder. Decoding is performed again according to the foregoing decoding process of the first decoder. The others may be deduced by analogy, until all decoders complete decoding, so as to obtain the final decoding result of the first decoding network. The final decoding result is used as the static element task query feature.

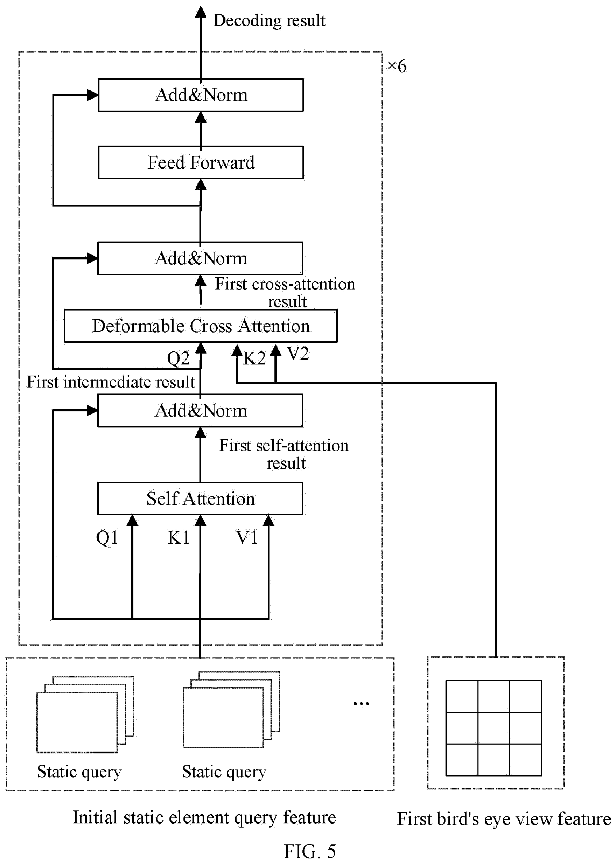

In an optional example, FIG. 5 is a schematic diagram of a network structure of a first decoding network according to an exemplary embodiment of this disclosure. As shown in FIG. 5, the first decoding network includes 6 decoders. ×6 indicates that the first decoding network includes decoders within 6 dashed boxes. For the decoders within the dashed boxes, the first decoder is used as an example, where Q1, K1, and V1 respectively represent the first query tensor, the first key tensor, and the first value tensor; Self Attention represents the first self-attention network; Add&Norm represents the addition and normalization network; the Add&Norm connected to the first self-attention network represents the first addition and normalization network; Q2, K2, and V2 respectively represent the second query tensor, the second key tensor, and the second value tensor; Deformable Cross Attention represents the first deformable cross-attention network; and Feed Forward represents the feedforward network. After being mapped as the first query tensor, the first key tensor, and the first value tensor, the initial static element query feature performs self-interaction in the first self-attention network to obtain the first self-attention result. The first self-attention result is added to the initial static element query feature and is normalized to obtain the first intermediate result. The first intermediate result is mapped as the second query tensor, and meanwhile, the first bird's eye view feature is mapped as the second key tensor and the second value tensor. The second query tensor, the second key tensor, and the second value tensor perform cross-attention in the first deformable cross-attention network to achieve interaction between the first bird's eye view feature and the initial static element query feature, so as to obtain the first cross-attention result. The first cross-attention result is added to the first intermediate result and is normalized to obtain the first normalization result. The decoding result of the first decoder is obtained based on the first normalization result through the feedforward network and another addition and normalization network. The decoding result is further decoded by 5 decoders to obtain the static element task query feature.

In an optional example, the first self-attention network may be a multi-head self-attention network, and the first deformable cross-attention network may also be a multi-head deformable cross-attention network. This may be specifically set according to actual requirements.

In an optional example, steps 20311a to 20317a can be executed either by the processor invoking corresponding instructions stored in the memory, or by the first processing unit that is run by the processor.

According to this embodiment of this disclosure, self-interaction of a static element query feature may be achieved through the self-attention network in the first decoding network, so that internal correlation of the static element query feature may be captured, and then the static element query feature interacts with the bird's eye view feature in the deformable cross-attention network to achieve sparse attention for data, so as to flexibly capture features of a relevant local area. This helps to reduce computational complexity while ensuring acquisition of accurate and effective relevant features, thereby improving a network inference speed.

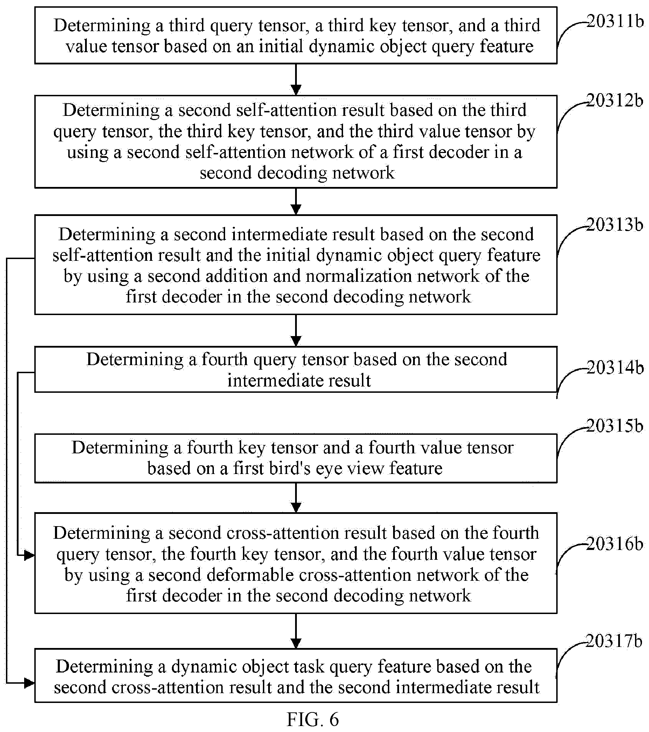

FIG. 6 is a schematic flowchart of step 2031b according to an exemplary embodiment of this disclosure.

In an optional example, step 2031b of determining the dynamic object task query feature based on the first bird's eye view feature and an initial dynamic object query feature by using a pre-trained second decoding network includes the following steps.

Step 20311b: Determining a third query tensor, a third key tensor, and a third value tensor based on the initial dynamic object query feature.

Step 20312b: Determining a second self-attention result based on the third query tensor, the third key tensor, and the third value tensor by using a second self-attention network of a first decoder in the second decoding network.

Step 20313b: Determining a second intermediate result based on the second self-attention result and the initial dynamic object query feature by using a second addition and normalization network of the first decoder in the second decoding network.

Step 20314b: Determining a fourth query tensor based on the second intermediate result.

Step 20315b: Determining a fourth key tensor and a fourth value tensor based on the first bird's eye view feature.

Step 20316b: Determining a second cross-attention result based on the fourth query tensor, the fourth key tensor, and the fourth value tensor by using a second deformable cross-attention network of the first decoder in the second decoding network.

Step 20317b: Determining the dynamic object task query feature based on the second cross-attention result and the second intermediate result.

Specific operating principles of steps 20311b to 20317b are same or similar to those of steps 20311a to 20317a described above, a difference is that step 20311b is performed based on the initial dynamic object query feature while step 20311a is performed based on the initial static element query feature. Details are not described herein. On this basis, a network structure of the second decoding network is same or similar to that of the first decoding network, and details are not described herein

In an optional example, steps 20311b to 20317b described above can be executed either by the processor invoking corresponding instructions stored in the memory, or by the second processing unit that is run by the processor.

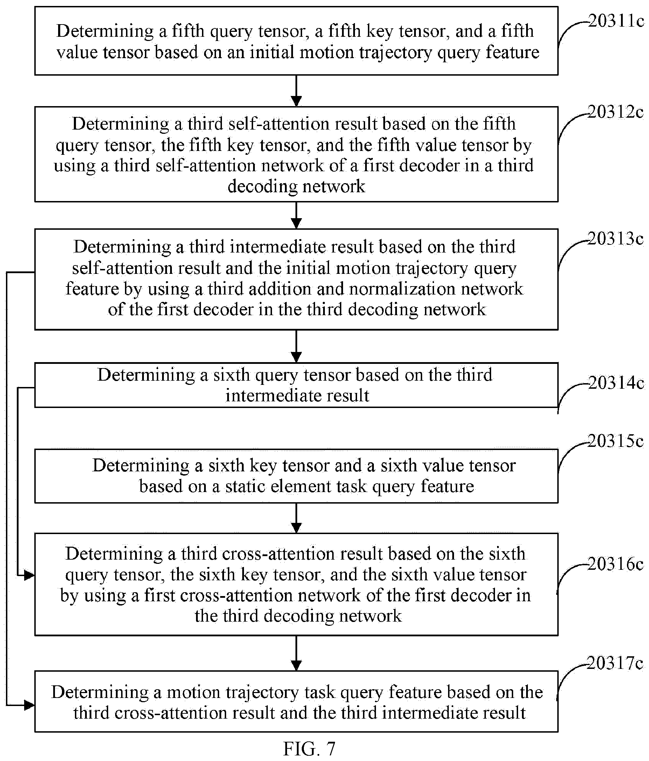

FIG. 7 is a schematic flowchart of step 2031c according to an exemplary embodiment of this disclosure.

In an optional example, step 2031c of determining the motion trajectory task query feature based on the static element task query feature and an initial motion trajectory query feature by using a pre-trained third decoding network includes the following steps.

Step 20311c: Determining a fifth query tensor, a fifth key tensor, and a fifth value tensor based on the initial motion trajectory query feature.

Step 20312c: Determining a third self-attention result based on the fifth query tensor, the fifth key tensor, and the fifth value tensor by using a third self-attention network of a first decoder in the third decoding network.

Step 20313c: Determining a third intermediate result based on the third self-attention result and the initial motion trajectory query feature by using a third addition and normalization network of the first decoder in the third decoding network.

Step 20314c: Determining a sixth query tensor based on the third intermediate result.

Specific operating principles of steps 20311c to 20314c are same or similar to those of steps 20311a to 20314a, and details are not described herein.

Step 20315c: Determining a sixth key tensor and a sixth value tensor based on the static element task query feature.

The sixth query tensor and the sixth value tensor in this step are obtained through mapping based on the static element task query feature obtained in the foregoing examples. For a mapping principle, please refer to the foregoing content.

Step 20316c: Determining a third cross-attention result based on the sixth query tensor, the sixth key tensor, and the sixth value tensor by using a first cross-attention network of the first decoder in the third decoding network.

The first cross-attention network may adopt any implementable cross-attention network, which may be set according to actual requirements. For example, the first cross-attention network may adopt a cross-attention network structure in a conventional visual transformer, which is not specifically limited.

Step 20317c: Determining the motion trajectory task query feature based on the third cross-attention result and the third intermediate result.

For a specific operation principle of this step, please refer to step 20317a described above, and details are not described herein.

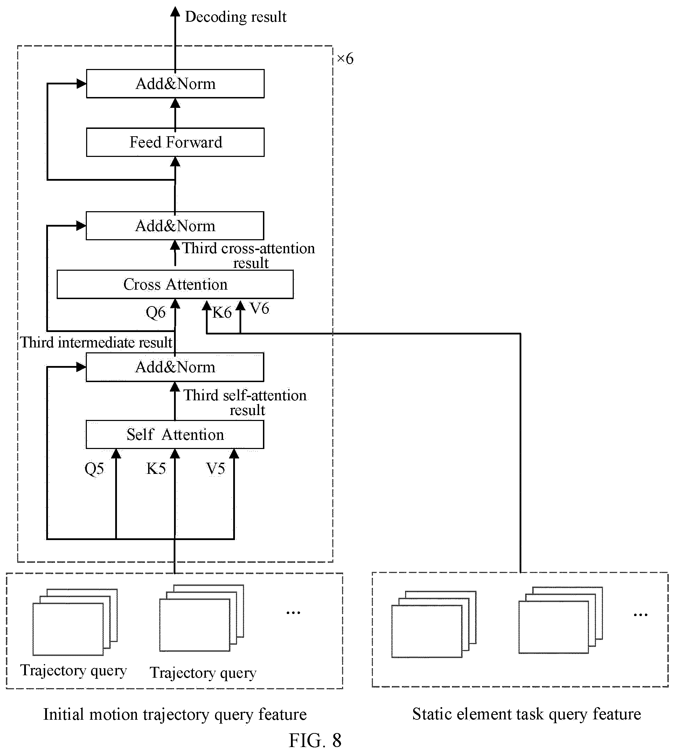

For example, FIG. 8 is a schematic diagram of a structure of a third decoding network according to an exemplary embodiment of this disclosure. The initial motion trajectory query feature includes a plurality of trajectory queries (the trajectory queries represent initial trajectory query features corresponding to the dynamic objects), wherein Q5, K5, and V5 respectively represent the fifth query tensor, the fifth key tensor, and the fifth value tensor; and Q6, K6, and V6 respectively represent the sixth query tensor, the sixth key tensor, and the sixth value tensor. For meanings of other symbols and other inference processes, please refer to the content described above, and details are not described herein.

In an optional example, steps 20311c to 20317c described above can be executed either by the processor invoking corresponding instructions stored in the memory, or by the third processing unit that is run by the processor.

According to this embodiment of this disclosure, self-interaction of the motion trajectory query feature may be achieved through the self-attention network in the third decoding network, so that internal correlation of the motion trajectory query feature may be captured, and then the motion trajectory query feature interacts with the static element task query feature in the cross-attention network to effectively capture the motion trajectory related feature of the dynamic object, thereby implicitly understanding surrounding static information (such as surrounding road information). This helps to provide accurate and effective feature data for accurately predicting more reasonable future motion trajectories of the dynamic objects, thereby achieving end-to-end motion trajectory prediction based on multi-angle-of-view image features.

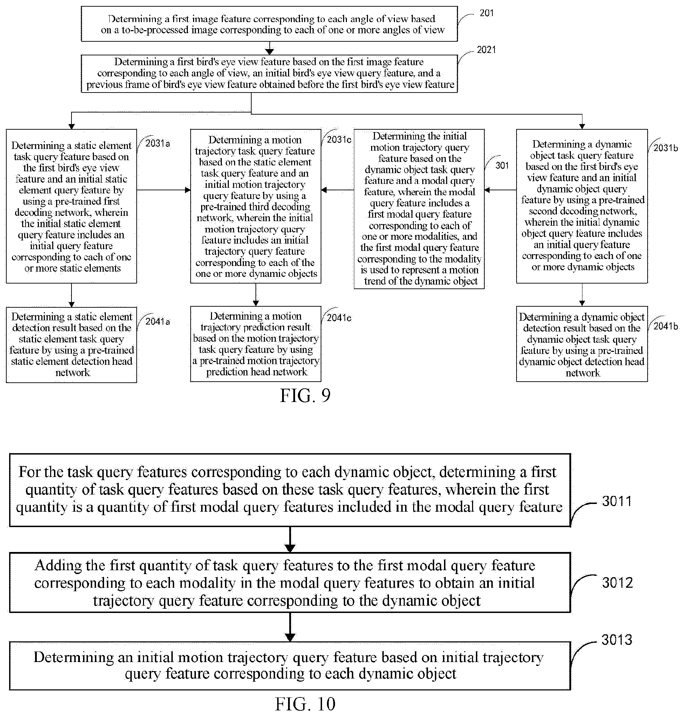

FIG. 9 is a schematic flowchart of an image processing method according to still another exemplary embodiment of this disclosure.

In an optional example, before step 2031c of determining the motion trajectory task query feature based on the static element task query feature and an initial motion trajectory query feature by using a pre-trained third decoding network, the method further includes:

Step 301: Determining the initial motion trajectory query feature based on the dynamic object task query feature and a modal query feature, wherein the modal query feature includes a first modal query feature corresponding to each of one or more modalities, and the first modal query feature corresponding to the modality is used to represent a motion trend of the dynamic object.

The modal query feature may be set according to actual requirements, for example, may be obtained through initialization according to a third initialization rule. Since the modal query feature may represent the motion trend of the dynamic object, the initial motion trajectory query feature may be determined in combination with the dynamic object task query feature that represents a position of the dynamic object.

For example, N3 D-dimensional modal queries (the modal queries represent first modal query features corresponding to the modality) may be randomly initialized to serve as modal query features. N3 may be set according to actual requirements. The modal query features are fused with the dynamic object task query feature to form N1 × N3 D-dimensional trajectory queries to serve as the initial motion trajectory query feature. Each dynamic object has N3 modalities, representing N3 motion trends of the dynamic object.

In an optional example, step 301 can be executed either by the processor invoking corresponding instructions stored in the memory, or by a fourth processing unit that is run by the processor.

According to this embodiment of this disclosure, the initial motion trajectory query feature is obtained based on the fusion of the dynamic object task query feature and the modal query feature that are obtained through updating, so that the initial motion trajectory query feature may include the task query feature corresponding to each dynamic object and a plurality of modal query features of each dynamic object. Different modalities may focus on different types of future movements (such as fast straight, low-speed straight, left turn, and right turn), which helps to provide effective data support for decoding the motion trajectory task query feature through the third decoding network in the future.

FIG. 10 is a schematic flowchart of step 301 according to an exemplary embodiment of this disclosure.

In an optional example, the dynamic object task query feature includes task query features of at least one dynamic object; and step 301 of determining the initial motion trajectory query feature based on the dynamic object task query feature and a modal query feature includes the following steps.

Step 3011: For the task query features corresponding to each dynamic object, determining a first quantity of task query features based on these task query features, wherein the first quantity is a quantity of first modal query features included in the modal query feature.

Each dynamic object may be assigned a first quantity of first modal query features to represent a first quantity of motion trends of each dynamic object. Therefore, to fuse the task query features of this object with the modal query features, a quantity of the task query features of this dynamic object may be transformed to be same as a quantity of the modal query features. Therefore, the first quantity of task query features may be determined based on the task query features of this dynamic object.

For example, if the modal query feature includes N3 D-dimensional modal queries, a D-dimensional task query feature (which may be referred to as a task query) of each dynamic object may be copied N3 times to obtain N3 identical D-dimensional task query features.

In an optional example, step 3011 can be executed either by the processor invoking corresponding instructions stored in the memory, or by a fourth processing unit that is run by the processor.

Step 3012: Adding the first quantity of task query features to the first modal query feature corresponding to each modality in the modal query features to obtain the initial trajectory query feature corresponding to the dynamic object.

For example, N3 identical task query features may be added to N3 first modal query features (modal queries) to form N3 motion trajectory query features.

In an optional example, step 3012 can be executed either by the processor by invoking corresponding instructions stored in the memory, or by the fourth processing unit that is run by the processor.

Step 3013: Determining the initial motion trajectory query feature based on the initial trajectory query feature corresponding to each dynamic object.

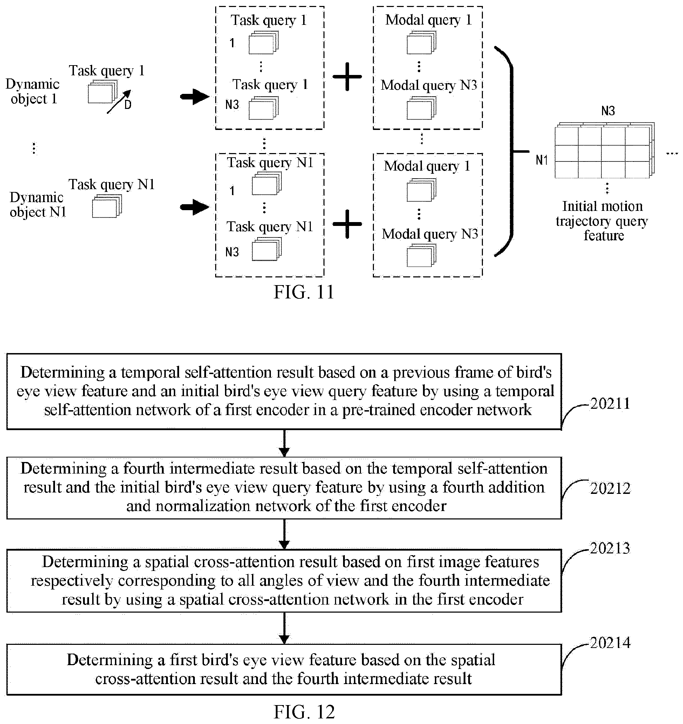

For example, FIG. 11 is a schematic diagram of a principle of determining an initial motion trajectory query feature according to an exemplary embodiment of this disclosure. In this example, a quantity of the dynamic objects is N1, the task query represents the task query feature corresponding to the dynamic object, a quantity of first modal query features (modal queries) of each dynamic object is N3, and the initial motion trajectory query feature finally obtained includes N1 × N3 D-dimensional initial trajectory query features.

In an optional example, step 3013 can be executed either by the processor invoking corresponding instructions stored in the memory, or by the fourth processing unit that is run by the processor.

According to this embodiment of this disclosure, the initial motion trajectory query feature is obtained by fusing the dynamic object task query feature with the modal query feature, so that the initial motion trajectory query feature includes dynamic object task query related features and motion trend related information of the dynamic object. Further, the accurate and valid motion trajectory task query feature may be obtained through the third decoding network obtained through training.

In an optional example, step 202 of determining a first bird's eye view feature based on the first image feature corresponding to each angle of view includes:

Step 2021: Determining the first bird's eye view feature based on the first image feature corresponding to each angle of view, an initial bird's eye view query feature, and a previous frame of bird's eye view feature obtained before the first bird's eye view feature.

The initial bird's eye view query feature is a feature initialized under a bird's eye view, and a size thereof may represent a size of the bird's eye view. The specific initialization rule may be set according to actual requirements. For example, H × W D-dimensional bird's eye view queries are initialized based on a required size of the bird's eye view to serve as the initial bird's eye view query feature, wherein H and W respectively represent a height and a width of the bird's eye view, and D represents a feature dimension of each bird's eye view query. Each bird's eye view query may correspond to one set of physical spatial three-dimensional coordinates, such as three-dimensional coordinates in a world coordinate system with a current vehicle as an origin. This may be specifically set according to actual requirements. The previous frame of bird's eye view feature is a bird's eye view feature obtained in a previous image processing flow, and a specific processing flow thereof is consistent with that of the first bird's eye view feature.

In an optional example, step 2021 can be executed either by the processor invoking corresponding instructions stored in the memory, or by a first determining unit that is run by the processor.

Since the previous frame of bird's eye view feature includes relevant historical information such as static elements and dynamic objects in an image collected in the previous frame, in combination with the previous frame of bird's eye view feature, the initial bird's eye view query feature, and the first image feature, not only relevant features of static elements and dynamic objects in a current to-be-processed image may be determined, but changes of the dynamic objects relative to the previous frame may also be tracked, thereby facilitating tracking of the dynamic objects.

FIG. 12 is a schematic flowchart of step 2021 according to an exemplary embodiment of this disclosure.

In an optional example, step 2021 of determining the first bird's eye view feature based on the first image feature corresponding to each angle of view, an initial bird's eye view query feature, and a previous frame of bird's eye view feature obtained before the first bird's eye view feature includes the following steps.

Step 20211: Determining a temporal self-attention result based on the previous frame of bird's eye view feature and the initial bird's eye view query feature by using a temporal self-attention network of a first encoder in a pre-trained encoder network.

The encoder network is used to encode the extracted first image features respectively corresponding to all the angles of view based on the previous frame of bird's eye view feature and the initial bird's eye view query feature, to obtain the first bird's eye view feature under the bird's eye view. The encoder network may include one or more encoders, each of which may include a temporal self-attention network. The temporal self-attention network is used for the initial bird's eye view query feature to find a corresponding position of the initial bird's eye view query feature in a historical previous frame of bird's eye view based on motion of the current vehicle, to serve as a reference position, which is used to extract features corresponding to an area of the reference position in the first image feature in the future. A current frame of first bird's eye view feature may be obtained through constant encoding by using a plurality of encoders.

Step 20212: Determining a fourth intermediate result based on the temporal self-attention result and the initial bird's eye view query feature by using a fourth addition and normalization network of the first encoder.

For a specific principle of the fourth addition and normalization network, please refer to the content described above, and details are not described herein.

Step 20213: Determining a spatial cross-attention result based on the first image feature corresponding to each angle of view and the fourth intermediate result by using a spatial cross-attention network in the first encoder.

The spatial cross-attention network is used to uniformly sample the fourth intermediate result in height to obtain a set of three-dimensional coordinates, and then map the three-dimensional coordinates to corresponding positions in the first image feature corresponding to each angle of view based on intrinsic and extrinsic parameters of a camera. Thus, features at the corresponding positions in the first image features may be extracted based on deformable convolution, and the current frame of first bird's eye view feature may be obtained through subsequent processing.

Step 20214: Determining the first bird's eye view feature based on the spatial cross-attention result and the fourth intermediate result.

In each encoder, in addition to the temporal self-attention network, the fourth addition and normalization network, and the spatial cross-attention network that are described above, there are also some other related networks. For example, in addition to the spatial cross-attention network, there are also an addition and normalization network, a feedforward network, another addition and normalization network, and the like, which may be specifically set according to actual requirements. Therefore, after being obtained, the spatial cross-attention result may further be added to the fourth intermediate result and be normalized, and then an encoding result of the first encoder may be obtained through the other related networks. If the encoder network includes a plurality of encoders, the encoding result output by the first encoder may be further encoded by subsequent encoders to finally obtain the first bird's eye view feature.

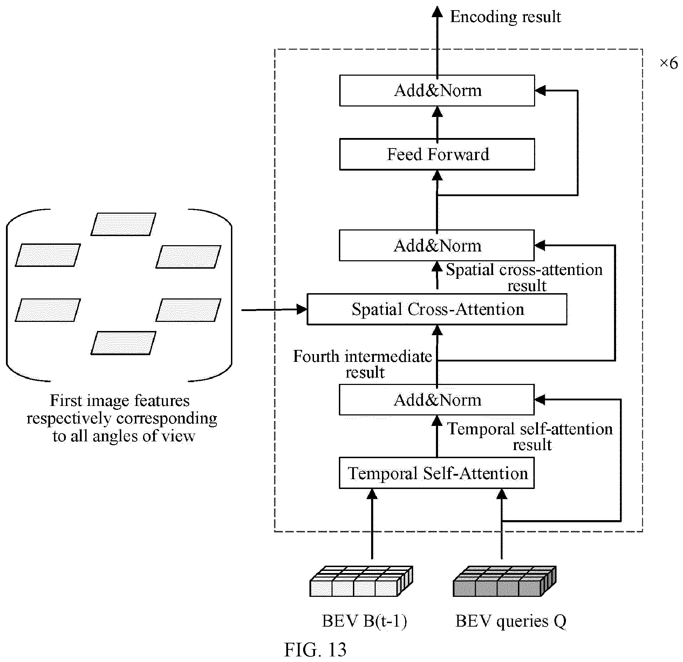

For example, FIG. 13 is a schematic diagram of a network structure of an encoder network according to an exemplary embodiment of this disclosure. BEV B (t-1) represents the previous frame of bird's eye view feature, BEV queries Q represents the initial bird's eye view query feature, Temporal Self-Attention represents the temporal self-attention network, and Spatial Cross-Attention represents the spatial cross-attention network. For meanings of other symbols, please refer to the content described above. The previous frame of bird's eye view feature BEV B (t-1) interacts with the initial bird's eye view query feature BEV queries Q in the temporal self-attention network. A corresponding position of the initial bird's eye view query feature in the previous frame of bird's eye view is found based on the motion of the vehicle to serve as the reference position, so as to obtain the temporal self-attention result. The temporal self-attention result is added to the initial bird's eye view query feature and is normalized to obtain the fourth intermediate result. The fourth intermediate result and the first image feature of each angle of view are subjected to spatial cross-attention operations in the spatial cross-attention network. Based on the deformable convolution, the spatial cross-attention network extracts features at a corresponding position from the first image feature based on the reference position, to obtain the spatial cross-attention result. The spatial cross-attention result is added to the fourth intermediate result and is normalized to obtain a fifth intermediate result. The encoding result of the first encoder is obtained based on the fifth intermediate result through the feedforward network (Feed Forward) and the addition and normalization network (Add&Norm). The encoding result is further encoded by subsequent encoders to obtain a final encoding result, that is, the first bird's eye view feature. It may be understood that in a network inference process, spatial position encoding embedding may also be performed for each first image feature, which is not limited in this disclosure.

In an optional example, steps 20211 to 20214 can be executed either by the processor invoking corresponding instructions stored in the memory, or by the first determining unit that is run by the processor.

According to this embodiment of this disclosure, position mapping between a current frame of initial bird's eye view query feature and the previous frame of bird's eye view is implemented by using the temporal self-attention network in the encoder network, and temporal correlation between the current frame and the previous frame is established. Thus, local features near the reference position are extracted from the first image feature based on the spatial cross-attention network. This helps to reduce computational complexity while effective features are extracted, thereby improving image processing efficiency.

In an optional example, step 204 of determining, based on each of the one or more task query features, a task processing result corresponding to each task query feature includes the following steps.

Step 2041a: Determining a static element detection result based on the static element task query feature by using a pre-trained static element detection head network.

The static element detection head network may adopt any implementable head network, such as a head network based on multilayer perceptrons.

In an optional example, step 2041a can be executed either by the processor invoking corresponding instructions stored in the memory, or by a second determining unit that is run by the processor.

Step 2041b: Determining a dynamic object detection result based on the dynamic object task query feature by using a pre-trained dynamic object detection head network.

The dynamic object detection head network may adopt any implementable head network, such as a head network based on multilayer perceptrons.

In an optional example, step 2041b can be executed either by the processor invoking corresponding instructions stored in the memory, or by a third determining unit that is run by the processor.

Step 2041c: Determining a motion trajectory prediction result based on the motion trajectory task query feature by using a pre-trained motion trajectory prediction head network.

The motion trajectory prediction head network may adopt any implementable head network, such as a head network based on multilayer perceptrons.

In an optional example, step 2041c can be executed either by the processor invoking corresponding instructions stored in the memory, or by a fourth determining unit that is run by the processor.

According to this embodiment of this disclosure, the first bird's eye view feature is obtained by encoding the first image features respectively corresponding to all the angles of view; and task query features of different tasks are decoded based on the first bird's eye view feature and decoding networks respectively corresponding to the different tasks. Thus, task processing results respectively corresponding to the different tasks are obtained based on head networks respectively corresponding to the different tasks. In this way, end-to-end multi-task processing based on multiframe and multi-angle-of-view surround view images may be implemented, which helps to improve task processing efficiency and may avoid or reduce dependence on high-precision maps generated offline and laser radars; and detection for the static element, three-dimensional detection for the dynamic object, and prediction for the motion trajectory may be implemented simultaneously, thereby helping to reduce costs.

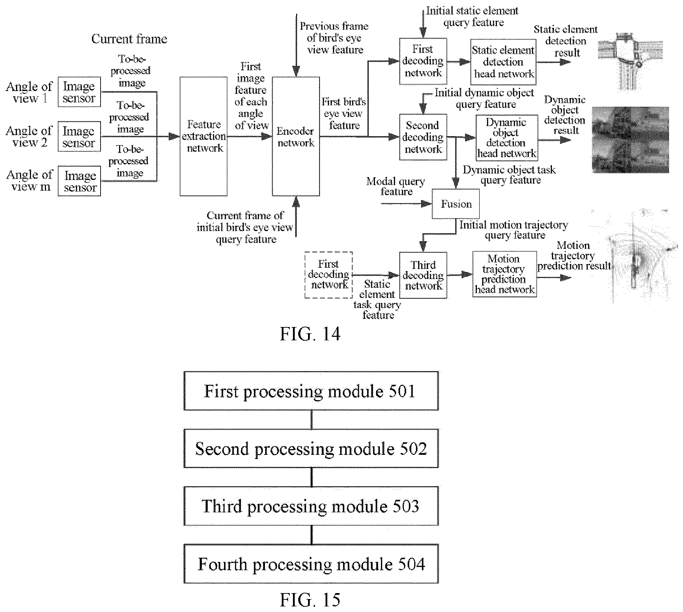

In an optional example, FIG. 14 is a schematic diagram of an overall structure of a network model for image processing according to an exemplary embodiment of this disclosure. The first image feature corresponding to each angle of view may be obtained by using a feature extraction network based on to-be-processed images of a plurality of angles of view. The first bird's eye view feature is obtained based on each first image feature through the encoder network, and the static element task query feature is obtained based on the first bird's eye view feature through the first decoding network. Thus, the static element detection result is obtained by using the static element detection head network. The dynamic object task query feature is obtained based on the first bird's eye view feature through the second decoding network, so that the dynamic object detection result is obtained by using the dynamic object detection head network. A dynamic object task query result is fused with the modal query feature to obtain the initial motion trajectory query feature. The static element task query feature is obtained based on the initial motion trajectory query feature and the first decoding network, and the motion trajectory task query feature is obtained by using the third decoding network. Thus, the motion trajectory prediction result is obtained by using the motion trajectory prediction head network.

In an optional example, the network model may be obtained through pre-training. When the network model includes a plurality of tasks, the plurality of tasks may be trained together, or may be trained separately and then be trained comprehensively. This may be specifically set according to actual requirements. For example, to ensure better performance in motion trajectory prediction, a static element task and a dynamic object task may be trained first to obtain a basic model, and then three tasks may be trained together based on the basic model. A specific training principle is not described in detail.

According to the embodiments of this disclosure, the task processing of the static elements, the dynamic objects, and the motion trajectories may be implemented by using only the multi-angle-of-view images. Compared to the laser radars, this disclosure may obtain richer environmental information, and has lower hardware costs, being easier to deploy. Moreover, according to the embodiments of this disclosure, online generation of static map information may be achieved through static element detection, without relying on the high-precision maps that are generated offline, having a wider range of application scenarios. In addition, the disclosure embodiments eliminates the needs for explicit dynamic target tracking, thereby reducing the computational complexity of the model and avoiding impact of tracking module errors on subsequent processing, thereby further improving accuracy of the task processing results.

In an optional example, feature fusion may also be performed on the image of each angle of view and data collected by the laser radar for end-to-end single-task or multi-task processing, thereby improving richness of feature information and further enhancing model performance.

The foregoing embodiments or optional examples in this disclosure may be implemented separately or in any combination without conflict. This may be specifically set according to actual requirements, and is not limited in this disclosure.

Any image processing method provided in the embodiments of this disclosure may be implemented by any suitable device with a data processing capability, including but not limited to a terminal device and a server. Alternatively, any image processing method provided in the embodiments of this disclosure may be implemented by the processor. For example, the processor implements any image processing method described in the embodiments of this disclosure by invoking corresponding instructions stored in the memory. Details are not described below.

Persons of ordinary skills in the art may understand that: all or some of the steps for implementing the foregoing method embodiments may be completed through hardware related to program instructions. A program may be stored in a computer readable storage medium. During execution, the program performs the steps including the foregoing method embodiments. Storage media include various media that may store program code, such as a ROM, a RAM, a magnetic disk, or a compact disc.

### Exemplary apparatus

FIG. 15 is a schematic diagram of a structure of an image processing apparatus according to an exemplary embodiment of this disclosure. The apparatus in this embodiment may be configured to implement the corresponding method embodiments of this disclosure. The apparatus shown in FIG. 15 includes a first processing module 501, a second processing module 502, a third processing module 503, and a fourth processing module 504.

The first processing module 501 is configured to determine a first image feature corresponding to each angle of view based on a to-be-processed image corresponding to each of one or more angles of view. The second processing module 502 is configured to determine a first bird's eye view feature based on the first image feature corresponding to each angle of view. The third processing module 503 is configured to determine at least one task query feature in a static element task query feature, a dynamic object task query feature, and a motion trajectory task query feature based on the first bird's eye view feature. The fourth processing module 504 is configured to determine, based on each of the one or more task query features, a task processing result corresponding to each task query feature.

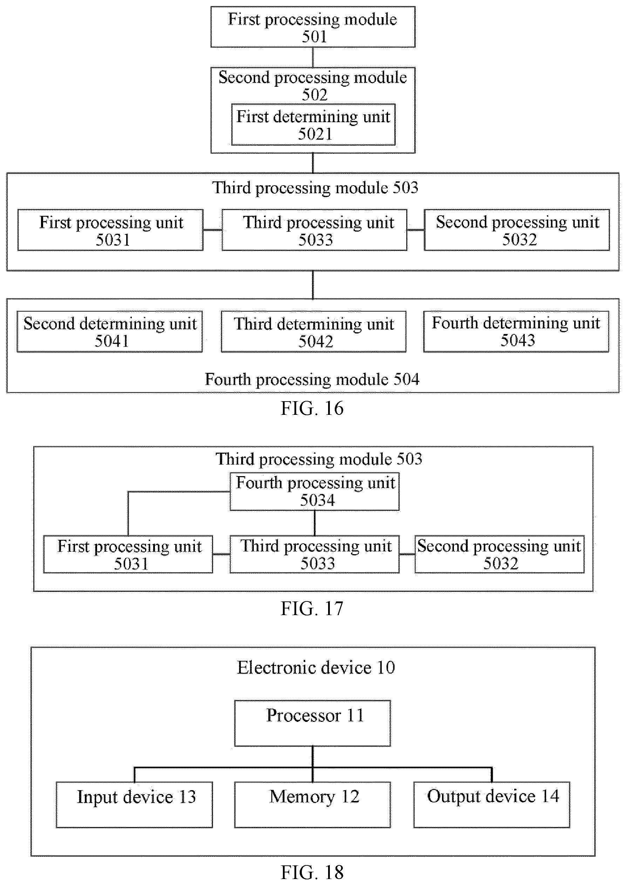

FIG. 16 is a schematic diagram of a structure of an image processing apparatus according to another exemplary embodiment of this disclosure.

In an optional example, the third processing module 503 includes:
a first processing unit 5031, configured to determine the static element task query feature based on the first bird's eye view feature and an initial static element query feature by using a pre-trained first decoding network, wherein the initial static element query feature includes an initial query feature corresponding to each of one or more static elements.

In an optional example, the third processing module 503 includes:
a second processing unit 5032, configured to determine the dynamic object task query feature based on the first bird's eye view feature and an initial dynamic object query feature by using a pre-trained second decoding network, wherein the initial dynamic object query feature includes an initial query feature corresponding to each of one or more dynamic objects.

In an optional example, the third processing module 503 includes:
a third processing unit 5033, configured to determine the motion trajectory task query feature based on the static element task query feature and an initial motion trajectory query feature by using a pre-trained third decoding network, wherein the initial motion trajectory query feature includes an initial trajectory query feature corresponding to each of the one or more dynamic objects.

In an optional example, the third processing module 503 may include at least two of the first processing unit 5031, the second processing unit 5032, and the third processing unit 5033 that are described above, which may be specifically set according to actual requirements.

In an optional example, the first processing unit 5031 is specifically configured to:
determine a first query tensor, a first key tensor, and a first value tensor based on the initial static element query feature; determine a first self-attention result based on the first query tensor, the first key tensor, and the first value tensor by using a first self-attention network of a first decoder in the first decoding network; determine a first intermediate result based on the first self-attention result and the initial static element query feature by using a first addition and normalization network of the first decoder in the first decoding network; determine a second query tensor based on the first intermediate result; determine a second key tensor and a second value tensor based on the first bird's eye view feature; determine a first cross-attention result based on the second query tensor, the second key tensor, and the second value tensor by using a first deformable cross-attention network of the first decoder in the first decoding network; and determine the static element task query feature based on the first cross-attention result and the first intermediate result.

In an optional example, the second processing unit 5032 is specifically configured to:
determine a third query tensor, a third key tensor, and a third value tensor based on the initial dynamic object query feature; determine a second self-attention result based on the third query tensor, the third key tensor, and the third value tensor by using a second self-attention network of a first decoder in the second decoding network; determine a second intermediate result based on the second self-attention result and the initial dynamic object query feature by using a second addition and normalization network of the first decoder in the second decoding network; determine a fourth query tensor based on the second intermediate result; determine a fourth key tensor and a fourth value tensor based on the first bird's eye view feature; determine a second cross-attention result based on the fourth query tensor, the fourth key tensor, and the fourth value tensor by using a second deformable cross-attention network of the first decoder in the second decoding network; and determine the dynamic object task query feature based on the second cross-attention result and the second intermediate result.

In an optional example, the third processing unit 5033 is specifically configured to:
determine a fifth query tensor, a fifth key tensor, and a fifth value tensor based on the initial motion trajectory query feature; determine a third self-attention result based on the fifth query tensor, the fifth key tensor, and the fifth value tensor by using a third self-attention network of a first decoder in the third decoding network; determine a third intermediate result based on the third self-attention result and the initial motion trajectory query feature by using a third addition and normalization network of the first decoder in the third decoding network; determine a sixth query tensor based on the third intermediate result; determine a sixth key tensor and a sixth value tensor based on the static element task query feature; determine a third cross-attention result based on the sixth query tensor, the sixth key tensor, and the sixth value tensor by using a first cross-attention network of the first decoder in the third decoding network; and determine the motion trajectory task query feature based on the third cross-attention result and the third intermediate result.

FIG. 17 is a schematic diagram of a structure of a third processing module 503 according to an exemplary embodiment of this disclosure.

In an optional example, the third processing module 503 further includes:
a fourth processing unit 5034, configured to determine the initial motion trajectory query feature based on the dynamic object task query feature and a modal query feature, wherein the modal query feature includes a first modal query feature corresponding to each of one or more modalities, and the first modal query feature corresponding to the modality is used to represent a motion trend of the dynamic object.

In an optional example, the dynamic object task query feature includes task query features of the at least one dynamic object; and the fourth processing unit 5034 is specifically configured to:
for the task query features corresponding to each dynamic object, determine a first quantity of task query features based on these task query features, wherein the first quantity is a quantity of first modal query features included in the modal query feature; add the first quantity of task query features to the first modal query feature corresponding to each modality in the modal query features to obtain the initial trajectory query feature corresponding to the dynamic object; and determine the initial motion trajectory query feature based on the initial trajectory query feature corresponding to each dynamic object.

In an optional example, the second processing module 502 includes:
a first determining unit 5021, configured to determine the first bird's eye view feature based on the first image feature corresponding to each angle of view, an initial bird's eye view query feature, and a previous frame of bird's eye view feature obtained before the first bird's eye view feature.

In an optional example, the first determining unit 5021 is specifically configured to:
determine a temporal self-attention result based on the previous frame of bird's eye view feature and the initial bird's eye view query feature by using a temporal self-attention network of a first encoder in a pre-trained encoder network; determine a fourth intermediate result based on the temporal self-attention result and the initial bird's eye view query feature by using a fourth addition and normalization network of the first encoder; determine a spatial cross-attention result based on the first image feature corresponding to each angle of view and the fourth intermediate result by using a spatial cross-attention network in the first encoder; and determine the first bird's eye view feature based on the spatial cross-attention result and the fourth intermediate result.

In an optional example, the fourth processing module 504 includes:
a second determining unit 5041, configured to determine a static element detection result based on the static element task query feature by using a pre-trained static element detection head network; a third determining unit 5042, configured to determine a dynamic object detection result based on the dynamic object task query feature by using a pre-trained dynamic object detection head network; and a fourth determining unit 5043, configured to determine a motion trajectory prediction result based on the motion trajectory task query feature by using a pre-trained motion trajectory prediction head network.

In an optional example, the foregoing units of this disclosure may also be divided into finer granularity according to actual requirements. For example, the unit is divided into a plurality of subunits. This may be specifically set according to actual requirements.

The foregoing embodiments or optional examples in this disclosure may be implemented separately or in any combination without conflict. This may be specifically set according to actual requirements, and is not limited in this disclosure.

For beneficial technical effects corresponding to the exemplary embodiments of this apparatus, reference may be made to the corresponding beneficial technical effects in the section of exemplary method described above, and details are not described herein again.

### Exemplary electronic device

FIG. 18 is a schematic diagram of a structure of an electronic device according to an application embodiment of this disclosure. In this embodiment, an electronic device 10 includes one or more processors 11 and a memory 12.

The processor 11 may be a central processing unit (CPU) or another form of processing unit having a data processing capability and/or an instruction execution capability, and may control other components in the electronic device 10 to implement desired functions.

The memory 12 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 11 may execute the program instruction to implement the method according to various embodiments of this disclosure that are described above and/or other desired functions. Various contents such as an input signal, a signal component, and a noise component may also be stored in the computer readable storage medium.

In an example, the electronic device 10 may further include an input device 13 and an output device 14. These components are connected to each other through a bus system and/or another form of connection mechanism (not shown).

In addition, the input device 13 may further include, for example, a keyboard and a mouse.

The output device 14 may output various information to the outside. The output device 14 may include, for example, a display, a speaker, a printer, a communication network, and a remote output device connected by the communication network.

Certainly, for simplicity, FIG. 18 shows only some of components in the electronic device 10 that are related to this disclosure, and components such as a bus and an input/output interface are omitted. In addition, according to specific application situations, the electronic device 10 may further include any other appropriate components.

### Exemplary computer program product and computer readable storage medium

In addition to the foregoing method and device, the embodiments of this disclosure may also relate to a computer program product, which includes computer program instructions. When the computer program instructions are run by a processor, the processor is enabled to perform the steps, of the method according to the embodiments of this disclosure, that are described in the "Exemplary method" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. An image processing method, comprising:
determining a first image feature corresponding to each angle of view based on a to-be-processed image corresponding to each of one or more angles of view;
determining a first bird's eye view feature based on the first image feature corresponding to each angle of view;
determining at least one task query feature in a static element task query feature, a dynamic object task query feature, and a motion trajectory task query feature based on the first bird's eye view feature; and
determining, based on each of the one or more task query features, a task processing result corresponding to each task query feature.

2. The method according to claim 1, wherein the determining at least one task query feature in a static element task query feature, a dynamic object task query feature, and a motion trajectory task query feature based on the first bird's eye view feature comprises:
determining the static element task query feature based on the first bird's eye view feature and an initial static element query feature by using a pre-trained first decoding network, wherein the initial static element query feature comprises an initial query feature corresponding to each of one or more static elements; and/or,
determining the dynamic object task query feature based on the first bird's eye view feature and an initial dynamic object query feature by using a pre-trained second decoding network, wherein the initial dynamic object query feature comprises an initial query feature corresponding to each of one or more dynamic objects; and/or,
determining the motion trajectory task query feature based on the static element task query feature and an initial motion trajectory query feature by using a pre-trained third decoding network, wherein the initial motion trajectory query feature comprises an initial trajectory query feature corresponding to each of the one or more dynamic objects.

3. The method according to claim 2, wherein the determining the static element task query feature based on the first bird's eye view feature and an initial static element query feature by using a pre-trained first decoding network comprises:
determining a first query tensor, a first key tensor, and a first value tensor based on the initial static element query feature;
determining a first self-attention result based on the first query tensor, the first key tensor, and the first value tensor by using a first self-attention network of a first decoder in the first decoding network;
determining a first intermediate result based on the first self-attention result and the initial static element query feature by using a first addition and normalization network of the first decoder in the first decoding network;
determining a second query tensor based on the first intermediate result;
determining a second key tensor and a second value tensor based on the first bird's eye view feature;
determining a first cross-attention result based on the second query tensor, the second key tensor, and the second value tensor by using a first deformable cross-attention network of the first decoder in the first decoding network; and
determining the static element task query feature based on the first cross-attention result and the first intermediate result; and/or
the determining the dynamic object task query feature based on the first bird's eye view feature and an initial dynamic object query feature by using a pre-trained second decoding network comprises:
determining a third query tensor, a third key tensor, and a third value tensor based on the initial dynamic object query feature;
determining a second self-attention result based on the third query tensor, the third key tensor, and the third value tensor by using a second self-attention network of a first decoder in the second decoding network;
determining a second intermediate result based on the second self-attention result and the initial dynamic object query feature by using a second addition and normalization network of the first decoder in the second decoding network;
determining a fourth query tensor based on the second intermediate result;
determining a fourth key tensor and a fourth value tensor based on the first bird's eye view feature;
determining a second cross-attention result based on the fourth query tensor, the fourth key tensor, and the fourth value tensor by using a second deformable cross-attention network of the first decoder in the second decoding network; and
determining the dynamic object task query feature based on the second cross-attention result and the second intermediate result.

4. The method according to claim 2, wherein the determining the motion trajectory task query feature based on the static element task query feature and an initial motion trajectory query feature by using a pre-trained third decoding network comprises:
determining a fifth query tensor, a fifth key tensor, and a fifth value tensor based on the initial motion trajectory query feature;
determining a third self-attention result based on the fifth query tensor, the fifth key tensor, and the fifth value tensor by using a third self-attention network of a first decoder in the third decoding network;
determining a third intermediate result based on the third self-attention result and the initial motion trajectory query feature by using a third addition and normalization network of the first decoder in the third decoding network;
determining a sixth query tensor based on the third intermediate result;
determining a sixth key tensor and a sixth value tensor based on the static element task query feature;
determining a third cross-attention result based on the sixth query tensor, the sixth key tensor, and the sixth value tensor by using a first cross-attention network of the first decoder in the third decoding network; and
determining the motion trajectory task query feature based on the third cross-attention result and the third intermediate result.

5. The method according to claim 2, wherein before the determining the motion trajectory task query feature based on the static element task query feature and an initial motion trajectory query feature by using a pre-trained third decoding network, the method further comprises:
determining the initial motion trajectory query feature based on the dynamic object task query feature and a modal query feature, wherein the modal query feature comprises a first modal query feature corresponding to each of one or more modalities, and the first modal query feature corresponding to the modality is used to represent a motion trend of the dynamic object.

6. The method according to claim 5, wherein the dynamic object task query feature comprises task query features of the at least one dynamic object; and the determining the initial motion trajectory query feature based on the dynamic object task query feature and a modal query feature comprises:
for the task query features corresponding to each dynamic object, determining a first quantity of task query features based on these task query features, wherein the first quantity is a quantity of first modal query features comprised in the modal query feature;
adding the first quantity of task query features respectively to the first modal query feature corresponding to each modality in the modal query features to obtain the initial trajectory query feature corresponding to the dynamic object; and
determining the initial motion trajectory query feature based on the initial trajectory query feature corresponding to each dynamic object.

7. The method according to any one of claims 1 to 6, wherein the determining a first bird's eye view feature based on the first image feature corresponding to each angle of view comprises:
determining the first bird's eye view feature based on the first image feature corresponding to each angle of view, an initial bird's eye view query feature, and a previous frame of bird's eye view feature obtained before the first bird's eye view feature.

8. The method according to any claim 7, wherein the determining the first bird's eye view feature based on the first image feature corresponding to each angle of view, an initial bird's eye view query feature, and a previous frame of bird's eye view feature obtained before the first bird's eye view feature comprises:
determining a temporal self-attention result based on the previous frame of bird's eye view feature and the initial bird's eye view query feature by using a temporal self-attention network of a first encoder in a pre-trained encoder network;
determining a fourth intermediate result based on the temporal self-attention result and the initial bird's eye view query feature by using a fourth addition and normalization network of the first encoder;
determining a spatial cross-attention result based on the first image feature corresponding to each angle of view and the fourth intermediate result by using a spatial cross-attention network in the first encoder; and
determining the first bird's eye view feature based on the spatial cross-attention result and the fourth intermediate result.

9. The method according to any one of claims 1 to 6, wherein the determining, based on each of the one or more task query features, a task processing result corresponding to each task query feature comprises:
determining a static element detection result based on the static element task query feature by using a pre-trained static element detection head network;
determining a dynamic object detection result based on the dynamic object task query feature by using a pre-trained dynamic object detection head network; and
determining a motion trajectory prediction result based on the motion trajectory task query feature by using a pre-trained motion trajectory prediction head network.

10. An image data processing apparatus, comprising:
a first processing module, configured to determine a first image feature corresponding to each angle of view based on a to-be-processed image corresponding to each of one or more angles of view;
a second processing module, configured to determine a first bird's eye view feature based on the first image feature corresponding to each angle of view;
a third processing module, configured to determine at least one task query feature in a static element task query feature, a dynamic object task query feature, and a motion trajectory task query feature based on the first bird's eye view feature; and
a fourth processing module, configured to determine, based on each of the one or more task query features, a task processing result corresponding to each task query feature.

11. A computer readable storage medium, wherein the storage medium stores a computer program, and the computer program is used for implementing the image processing method according to any one of claims 1 to 9.

12. An electronic device, wherein the electronic device comprises:
a processor; and
a memory, configured to store processor-executable instructions, wherein
the processor is configured to read the executable instructions from the memory, and execute the instructions to implement the image processing method according to any one of claims 1 to 9.
